# FASCICULE DE BREVET EUROPEEN

(11) **EP 1 235 332 B1**
(45) Date de publication et mention de la délivrance du brevet: **13.04.2005**
(21) Numéro de dépôt: 02290043.5
(22) Date de dépôt: 09.01.2002
(51) Int. Cl.: H02K 49/04, H02K 19/36, B60L 7/28

(54) **Ensemble constitué par un ralentisseur électromagnétique et par ses moyens d'alimentations électrique**
Einheit bestehend aus einer elektromagnetische Bremse und deren elektische Versorgung
Unity consisting of an electromagnetic retarder and its electric supply

(30) Priorité: 09.01.2001 FR 0100224
(43) Date de publication de la demande: 28.08.2002
(73) Titulaire: Telma, 95310 Saint-Ouen L'Aumone (FR)
(72) Inventeur: Bouissou, Stephen Robert José, 75014 Paris (FR)
(74) Mandataire: Gamonal, Didier

(56) Documents cités:
- EP-A- 0 416 871
- EP-A- 1 014 545
- EP-A- 1 076 411
- US-A- 4 864 173

## Description

La présente invention concerne un ensemble constitué, d'une part, par un ralentisseur électromagnétique destiné à ralentir la rotation d'un arbre moteur de véhicule entraîné autour de son axe, et, d'autre part, par les moyens d'alimentation électrique dudit ralentisseur.

Parmi ces ensembles, l'invention concerna plus spécialement ceux qui comportent un stator coaxial à l'arbre moteur et un rotor solidaire en rotation de l'arbre moteur de façon à présenter une face cylindrique externe à proximité d'une face cylindrique interne du stator avec interposition d'un entrefer de faible épaisseur, le rotor comportant un inducteur, à au moins un enroulement d'électroaimant, propre à engendrer, sous l'effet d'un courant d'excitation électrique fourni par lesdits moyens d'alimentation électrique, un champ magnétique dans une pièce ferromagnétique annulaire du stator constituant l'induit du ralentisseur, et lesdits moyens d'alimentation électrique comprenant un alternateur dont l'induit, à bobinage polyphasé, notamment triphasé, dit induit motorique, fait partie du rotor et est connecté auxdits enroulements par l'intermédiaire d'un redresseur faisant également partie du rotor, et dont l'inducteur, dit inducteur statorique, fait partie du stator et entoure avec un faible jeu l'induit rotorique de cet alternateur, les deux couronnes rotoriques composées respectivement par l'enroulement d'electroaimant du ralentisseur et par l'induit de l'alternateur étant juxtaposées axialement sur la face extérieure d'un même manchon intérieur.

Le document EP 0 331 559 décrit un ensemble du type mentionné ci-dessus, dans lequel l'inducteur statorique de l'aitemateur se présente sous la forme d'une couronne de petits électroaimants à polarités altemées reliés à une source de courant continu.

L'un des intérêts de cet ensemble est qu'on alimente l'inducteur du ralentisseur moyennant un apport d'énergie électrique extérieur limité à celui nécessaire à l'alimentation de l'excitatrice de l'alternateur. Il convient de noter toutefois que, d'une part, cet apport d'énergie, bien que considéré comme faible, n'est pas négligeable, et que, d'autre part, l'alternateur, dont l'unique fonction consiste à alimenter électriquement l'inducteur du ralentisseur, n'est pas adapté pour compenser l'apport d'énergie électrique extérieur, de manière à rendre l'ensemble moins coûteux en énergie. En partlculier, cet alternateur n'est pas capable de foumir de l'énergie en vue, par exemple, d'alimenter les différents équipements électriques auxiliaires du véhicule.

La présente invention a notamment pour but de remédier à ces inconvénients.

A cet effet, l'ensemble selon la présente invention comporte en outre des premiers moyens de commutation destinés à coupler électriquement le ralentisseur à l'alternateur, et des seconds moyens de commutation destinés à coupler électriquement l'alternateur au réseau de bord du véhicule, lesdits premiers et seconds moyens de commutation étant adaptés pour être commandés ensemble dans deux premières positions correspondantes, pour lesquelles l'aitemateur fonctionne en tant que source d'alimentation électrique synchrone du ralentisseur par l'intermédiaire de son induit rotorique, ou bien dans deux secondes positions correspondantes, pour lesquelles l'alternateur fonctionne en tant que source d'allmentation électrique asynchrone du réseau de bord du véhicule par l'intermédiaire de son inducteur statorique.

L'ensemble présente ainsi l'avantage de conserver une architecture compacte, tout en bénéficiant d'un alternateur à plusieurs modes de fonctionnement, dont la commande est aisée et dont la structure, très simple, n'entraîne pas une augmantation du poids de l'ensemble.

Dans un mode de réalisation préféré de l'invention, on a recours à l'une et/ou à l'autre des dispositions suivantes:
- l'inducteur statorique de l'alternateur est à bobinage polyphasé ;
- les premiers et seconds moyens de commutation sont adaptés pour, en outre, être commandés ensemble dans deux troisièmes positions correspondantes, pour lesquelles l'alternateur fonctionne en tant que moteur asynchrone;
- l'alternateur est destiné à entraîner le moteur du véhicule;
- les premiers moyens de commutation comportent une pluralité d'interrupteurs dont le nombre est égal au nombre de phases de l'induit rotorique de l'alternateur, le premier d'entre eux étant relié entre la sortie du redresseur et l'inducteur rotorique du ralentisseur, les autres interrupteurs reliant quant à eux les phases de l'induit rotorique de l'alternateur, et les seconds moyens de commutation comportent une pluralité d'interrupteurs dont le nombre est égal au nombre de phases de l'inducteur statorique de l'alternateur, chacun de ces interrupteurs reliant un condensateur à l'inducteur statorique de l'alternateur ;
- les modes de fonctionnement de l'alternateur sont sélectionnés alternativement au moyen d'une unité de commande électronique qui est reliée à l'alternateur ;
- l'inducteur du ralentisseur est un inducteur à pôles entourés chacun d'un enroulement inducteur et saillant vers l'extérieur sur la face externe de la couronne rotorique du ralentisseur ;
- l'inducteur du ralentisseur est un inducteur à griffes et à un seul enroulement inducteur.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 montre, en vue perspective, portions arrachées, l'ensemble, établi conformément à l'invention, d'un ralentisseur électromagnétique de véhicule et de ses moyens d'excitation électrique ;
- la figure 2 montre schématiquement le même ensemble ;
- la figure 3 montre, en vue perspective éclatée, une variante du rotor du ralentisseur des figures 1 et 2.

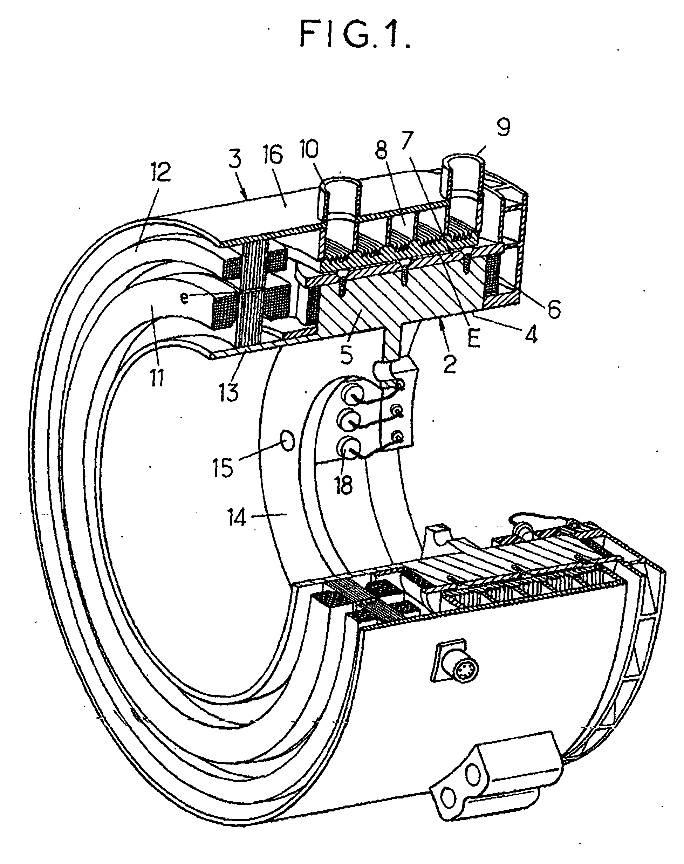

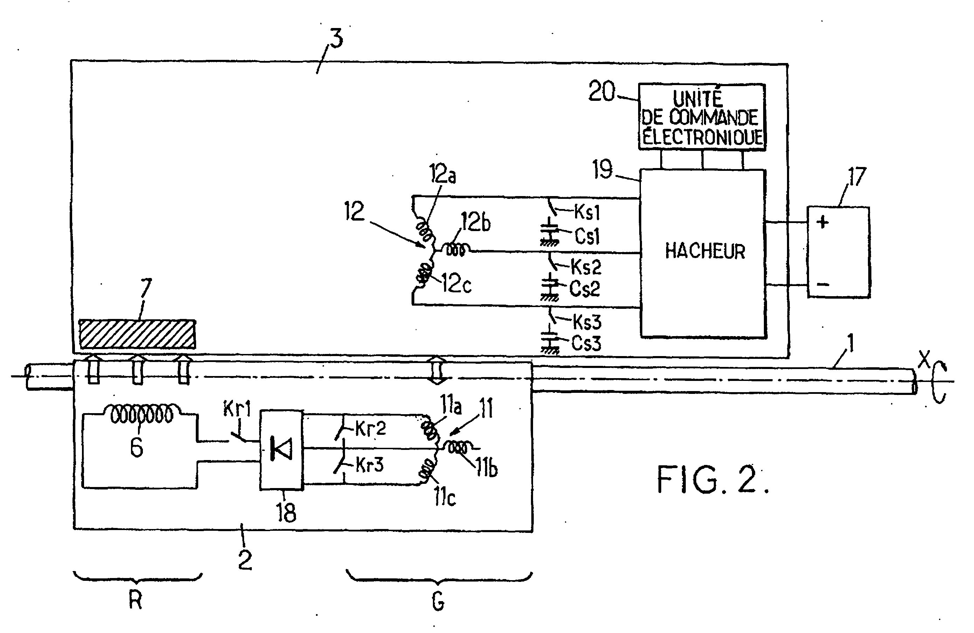

En référence aux figures 1 et 2, le ralentisseur considéré R est un ralentisseur électromagnétique R du type à courants de Foucault qui est destiné à ralentir la rotation d'un arbre moteur 1 du véhicule entraîné autour de son axe X, sensiblement horizontal.

D'une façon connue en soi, ce ralentisseur R comprend un rotor 2 solidarisé en rotation avec, par exemple, l'arbre de sortie 1 de la boîte de vitesse (non représentée) du véhicule et un stator 3 monté en porte-à-faux sur le carter (non représenté) de cette boîte.

Dans le mode de réalisation représenté, l'inducteur du ralentisseur R est monté rotatif, alors que l'induit reste fixe.

Plus précisément, le rotor 2 comporte une couronne 4 qui présente une forme sensiblement annulaire. Des noyaux polaires 5 font saillie sur la surface périphérique externe de la couronne 4, dans une direction radiale par rapport à cette dernière. Ces noyaux polaires sont régulièrement répartis autour de la couronne 4, chacun d'entre eux s'étendant parallèlement à l'axe X de l'arbre moteur. Chaque noyau polaire 5 est entouré par un enroulement ou bobine de fil électrique 6 dont la fonction est de conduire le courant électrique d'excitation du ralentisseur.

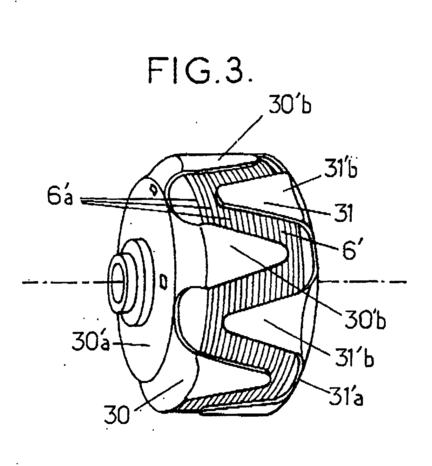

Selon une autre forme de réalisation du rotor représentée sur la figure 3, la couronne 4 comporte, à la place des noyaux polaires 5 et de leur bobine respective 6, un fil conducteur 6' qui entoure complètement son enveloppe de manière à former plusieurs spires 6'a successives. D'une manière connue en tant que telle, l'ensemble de ces spires de fil 6'a constitue l'enroulement inducteur du ralentisseur R.

Dans l'exemple représenté sur la figure 3, le rotor 2 comporte en outre deux couronnes 30 et 31 qui présentent chacune une forme sensiblement annulaire. Ces couronnes sont en tout point identiques et sont constituées respectivement d'un flasque radial 30'a et 31'a et d'une succession de griffes 30'b, 31'b qui ont, dans l'exemple représenté, une forme sensiblement triangulaire.

Les griffes 30'b et 31'b sont réparties à intervalles réguliers autour de leur couronne respective, chaque griffe 30'b, 31'b s'étendant selon un axe parallèle à l'axe X de l'arbre de transmission 1, à partir du bord périphérique du flasque 30'a, 31'a qui lui est associé. Les couronnes 30 et 31 ont un diamètre légèrement supérieur à celui de la couronne 4 de manière à être assemblées sur cette dernière, lesdites couronnes 30 et 31 étant alors disposées coaxialement à la couronne 4. La longueur axiale des couronnes 30 et 31 est déterminée de telle façon qu'elles entourent à elles deux sensiblement complètement la couronne 4, chaque griffe 30'b de la couronne 30 étant intercalée entre deux griffes voisines 31'b de la couronne 31.

Le stator 3, quant à lui, comporte une pièce annulaire 7 en matériau ferromagnétique qui constitue l'induit et dans laquelle sont engendrés les courants de Foucault générateurs de freinage et d'échauffement. Cette pièce annulaire 7 est constitué par un tambour cylindrique entourant l'inducteur avec interposition d'un entrefer cylindrique E.

La pièce annulaire 7 est, dans l'exemple représenté, refroidie à l'aide d'un courant de liquide fourni par un circuit de liquide qui, en référence à la figure 1, comporte un tronçon 8 qui longe directement la face, de la pièce induite 7, opposée à l'entrefer E.

Plus précisément, le tronçon 8 est ici formé par une canalisation s'étendant selon une hélice autour du tambour 7, canalisation terminée à ses deux extrémités par deux raccords d'entrée 9 et de sortie 10.

Pour alimenter l'inducteur rotatif du ralentisseur R, on a recours à une machine génératrice d'électricité G dont le rotor est solidarisé avec le rotor 2 du ralentisseur.

Dans le mode de réalisation préféré illustré, la génératrice G est un alternateur comportant :
- un rotor à bobinage polyphasé 11, notamment triphasé, constituant l'induit de cet alternateur,
- et un stator à bobinage polyphasé 12, notamment triphasé, constituant l'inducteur de cet alternateur et entourant le rotor 11 avec un faible jeu formant entrefer e.

Comme bien visible sur la figure 1, la liaison électromagnétique entre ce rotor 11 et ce stator 12 est effectuée exclusivement à travers cet entrefer e, sans aucun contact mécanique du type à bague et balai.

D'un point de vue architectural, l'induit 11 de l'alternateur est solidarisé avec les bobines 6 du ralentisseur, l'ensemble de ces éléments étant monté sur un même manchon 13 prolongé intérieurement par un voile transversal 14 lui-même évidé par des trous de fixation 15 et formant bride de raccordement à l'arbre 1.

Le stator 12 de l'alternateur est, quant à lui, monté à l'intérieur d'un manchon fixe 16 délimitant l'extérieur du tronçon de canalisation 8 ci-dessus.

Comme on peut le voir sur la figure 2, le stator 12 de l'alternateur est relié à une source de courant continu 17 telle que, par exemple, la batterie du véhicule.

Par ailleurs, un redresseur approprié 18, tel que par exemple un pont à diodes, relie électriquement le rotor induit 11 de l'alternateur et les bobines 6 inductrices du ralentisseur de telle façon que le courant alternatif recueilli aux bornes du rotor 11 de l'alternateur soit, d'une manière connue en tant que telle, redressé, avant d'être appliqué sur les bobines 6 du ralentisseur.

Bien entendu, comme illustré sur la figure 1, l'ensemble des composants 18 fait partie du rotor 2 au même titre que les bobines 6 et que l'induit 11 de l'alternateur.

L'architecture de l'ensemble qui vient d'être décrite ci-dessus permet avantageusement d'avoir recours à des premiers et des seconds moyens de commutation interposés respectivement entre le ralentisseur et l'alternateur, et entre l'alternateur et le réseau de bord du véhicule, les positions respectives de ces premiers et seconds moyens de commutation pouvant être commandées simultanément pour que l'alternateur fonctionne soit en tant que source d'alimentation électrique synchrone du ralentisseur par l'intermédiaire de son inducteur rotorique 11, soit en tant que source d'alimentation électrique asynchrone du réseau de bord du véhicule par l'intermédiaire de son induit statorique 12, soit encore en tant que moteur asynchrone.

A cet effet, comme illustré sur la figure 2, les premiers moyens de commutation comportent plusieurs interrupteurs solidaires du rotor 2, le nombre de ces interrupteurs étant lié au nombre de phases de l'induit rotorique 11 de l'alternateur. Le rotor 11 de l'alternateur étant, dans cet exemple, triphasé, les premiers moyens de commutation comportent trois interrupteurs, un premier interrupteur Kr1 étant interposé entre la sortie du redresseur 18 et les bobines 6 du ralentisseur, un second interrupteur Kr2 étant interposé entre une première phase 11a et une deuxième phase 11b de l'induit rotorique triphasé 11 de l'alternateur, et un troisième interrupteur Kr3 étant interposé entre ladite deuxième phase 11b et une troisième phase 11c de l'induit rotorique triphasé 11 précité.

Les seconds moyens de commutation comportent quant à eux plusieurs interrupteurs solidaires du stator 3, le nombre de ces interrupteurs étant également lié au nombre de phases de l'inducteur statorique 12 de l'alternateur. Le stator 12 de l'alternateur étant, dans cet exemple, triphasé, les seconds moyens de commutation comportent trois interrupteurs, un premier interrupteur Ks1 interposé entre une première phase 12a de l'inducteur statorique 12 triphasé de l'alternateur et la masse, un second interrupteur Ks2 interposé entre une deuxième phase 12b de l'inducteur 12 et la masse, et un troisième interrupteur Ks3 interposé entre une troisième phase 12c de l'inducteur 12 et la masse.

La borne de chaque interrupteur Ks1, Ks2, Ks3, qui est reliée à une phase correspondante de l'inducteur statorique 12, est, en outre, reliée à la source d'alimentation en courant continu 17, par l'intermédiaire d'un convertisseur hacheur 19, lequel est piloté par une unité de commande électronique 20.

L'autre borne de chaque interrupteur Ks1, Ks2, Ks3, est, quant à elle, reliée à la masse par l'intermédiaire d'un condensateur respectif Cs1, Cs2, Cs3.

Lorsque l'utilisateur souhaite faire fonctionner le ralentisseur, l'unité de commande électronique 20 agit sur le hacheur 19 de façon à ce que celui-ci transforme le courant continu fourni par la source de courant continu 17 en courant continu apte à alimenter les trois phases 12a, 12b et 12c de l'inducteur statorique 12 de l'alternateur. Pour ce faire, l'unité de commande électronique 20 agit également sur les premiers et seconds moyens de commutation de façon à ce que les interrupteurs Kr2, Kr3 et Ks1 à Ks3 basculent chacun en position ouverte, et à ce que l'interrupteur Kr1 bascule en position fermée.

A titre indicatif, le basculement en position ouverte/fermée des interrupteurs Kr1, Kr2 et Kr3 peut être effectué par commande infra-rouge, radiocommande ou analogue.

Une telle unité de commande électronique 20 permet à l'alternateur de fonctionner en tant que source d'alimentation électrique synchrone du ralentisseur. En effet, le mouvement relatif de l'induit 11 de l'alternateur par rapport à son inducteur 12 alimenté en courant continu soumet les phases 11a, 11b et 11c de l'induit 11 à des flux inducteurs alternés décalés dans le temps. Conformément à la loi de Faraday, chaque phase 11a, 11b et 11c est le siège d'une force électromotrice alternative, et, par voie de conséquence, de courants induits alternatifs, lesquels sont redressés par le pont de diodes 18 avant d'être appliqués sur les bobines 6 du ralentisseur. Ceci produit l'activation du ralentisseur et par voie de conséquence une absorption d'énergie sur l'arbre 1. Cette énergie est dissipée en chaleur et évacuée vers le système de refroidissement du moteur par l'eau circulant dans la canalisation 8.

Lorsque l'utilisateur ne souhaite pas faire fonctionner le ralentisseur, il peut utiliser avantageusement l'alternateur soit en tant que générateur d'énergie électrique asynchrone à bord du véhicule, soit en tant que moteur asynchrone.

Dans le premier cas, l'unité de commande électronique 20 agit sur le hacheur 19 de façon à ce que celui-ci transforme le courant alternatif triphasé délivré par l'inducteur statorique 12 de l'alternateur en courant continu adapté à l'alimentation du réseau de bord du véhicule. Pour ce faire, l'unité de commande électronique 20 agit également sur les premiers et seconds moyens de commutation de façon à ce que l'interrupteur Kr1 bascule en position ouverte, le ralentisseur étant ainsi déconnecté, et à ce que les interrupteurs Kr2, Kr3, et Ks1 à Ks3 basculent chacun en position fermée.

Ainsi, l'alternateur se comporte comme un générateur asynchrone à rotor en court-circuit peu différent d'une machine à cage, les condensateurs provoquant une réaction d'induit magnétisant.

Dans le second cas, l'unité de commande électronique 20 agit sur le hacheur 19 de façon à ce que celui-ci transforme le courant continu fourni par la source de courant continu 17 en courant alternatif apte à alimenter les trois phases 12a, 12b et 12c de l'inducteur statorique 12 de l'alternateur. Pour ce faire, l'unité de commande électronique 20 agit également sur les premiers et seconds moyens de commutation de façon à ce que les interrupteurs Kr1, Ks1 à Ks3 basculent chacun en position ouverte, et à ce que les interrupteurs Kr2, Kr3 basculent chacun en position fermée.

Le ralentisseur est ainsi déconnecté et les trois phases 12a, 12b et 12c de l'inducteur statorique 12 de l'alternateur sont alimentées par un système triphasé de courants alternatifs délivrés par le hacheur 19. Cet inducteur 12 crée alors un champ tournant, lequel induit des forces électromotrices et, par conséquent, des courants induits dans l'induit rotorique 11 de l'alternateur. Compte tenu du fait que les interrupteurs Kr2 et Kr3 sont fermés, les trois phases 11a, 11b et 11c de l'induit rotorique 11 constituent des circuits fermés, et lesdites forces électromotrices provoquent la circulation de courants formant un système triphasé équilibré, ce qui crée un champ tournant. L'interaction des courants induits et du champ engendre un couple de démarrage, ce qui permet à l'alternateur de fonctionner en tant que moteur asynchrone.

L'intérêt d'un tel mode de fonctionnement de l'alternateur réside dans la possibilité pour celui-ci de servir, par exemple, de moteur de lancement du moteur du véhicule.

## Revendications

1. Ensemble constitué, d'une part, par un ralentisseur électromagnétique destiné à ralentir la rotation d'un arbre moteur (1) de véhicule entraîné autour de son axe (X), et, d'autre part, par les moyens d'alimentation électrique (G) dudit ralentisseur, cet ensemble comportant un stator (3) coaxial à l'arbre moteur (1) et un rotor (2) solidaire en rotation de l'arbre moteur (1) de façon à présenter une face cylindrique externe à proximité d'une face cylindrique interne du stator (3) avec interposition dun entrefer (E) de faible épaisseur, le rotor (2) comportant un inducteur, à au moins un enroulement d'électroaimant (6), propre à engendrer, sous l'effet d'un courant d'excitation électrique fourni par lesdits moyens d'alimentation électrique (G), un champ magnétique dans une pièce ferromagnétique annulaire (7) du stator (3) constituant l'induit du ralentisseur (R), et lesdits moyens d'alimentation électrique (G) comprenant un alternateur dont l'induit, à bobinage polyphasé (11), dit induit rotorique, fait partie du rotor (2) et est connecté auxdits enroulements (6) par l'intermédiaire d'un redresseur (18) faisant égaiement partie du rotor (2), et dont l'inducteur, dit inducteur statorique fait partie du stator (3) et entoure avec un faible jeu (e) l'induit rotorique (11) de cet alternateur, les deux couronnes rotoriques composées respectivement par l'enroulement d'électroaimant (6) du ralentisseur (R) et par l'induit de l'alternateur (G) étant juxtaposées axialement sur la face extérieure d'un même manchon intérieur (13), **caractérisé en ce que** ledit ensemble comporte en outre des premiers moyens de commutation (Kr1, Kr2, Kr3) destinés à coupler électriquement le ralentisseur (R) à l'aitamateur (G), et des seconds moyens de commutation (Ks1, Ks2, Ks3) destinés à coupler électriquement l'aitemateur (G) au réseau de bord du véhicule, lesdits premiers et seconds moyens de commutation étant adaptés pour être commandés ensemble dans deux premières positions correspondantes, pour lesquelles l'alternateur fonctionne en tant que source d'alimentation électrique synchrone du ralentisseur par l'intermédiaire de son induit rotorique, ou bien dans deux secondes positions correspondantes, pour lesquelles l'alternateur fonctionne en tant que source d'alimentation électrique asynchrone du réseau de bord du véhicule par l'intermédiaire de son inducteur statorique.

2. Ensemble selon la revendication 1, **caractérisé en ce que** l'inducteur statorique de l'alternateur est à bobinage polyphasé (12).

3. Ensemble selon la revendication 1 ou la revendication 2, **caractérisé en ce que** les premiers (Kr1, Kr2, Kr3) et seconds (Ks1, Ks2, Ks3) moyens de commutation sont adaptés pour, en outre, être commandés ensemble dans deux troisièmes positions correspondantes, pour lesquelles l'alternateur fonctionne en tant que moteur asynchrone.

4. Ensemble selon la revendication 3, **caractérisé en ce que** ledit alternateur est destiné à entraîner le moteur du véhicule.

5. Ensemble selon l'une quelconque des revendications 1 à 4, **caractérisé en ce que** :
- les premiers moyens de commutation comportent une pluralité d'interrupteurs (Kr1, Kr2, Kr3) dont le nombre est égal au nombre de phases de l'induit rotorique de l'alternateur, le premier (Kr1) d'entre eux étant relié entre la sortie du redresseur (18) et l'inducteur rotorique (6) du ralentisseur (R), les autres interrupteurs (Kr2, Kr3) reliant quant à eux les phases de l'induit rotorique (11) de l'alternateur (G), et **en ce que** :
- les seconds moyens de commutation comportent une pluralité d'interrupteurs (Ks1, Ks2, Ks3) dont le nombre est égal au nombre de phases de l'inducteur statorique de l'alternateur, chacun de ces interrupteurs reliant un condensateur à l'inducteur statorique (12) de l'alternateur (G).

6. Ensemble selon l'une quelconque des revendications 1 à 5, **caractérisé en ce que** les modes de fonctionnement de l'alternateur sont sélectionnés alternativement au moyen d'une unité de commande électronique (20), qui est reliée à l'alternateur (G).

7. Ensemble selon l'une quelconque des revendications 1 à 6, **caractérisé en ce que** l'inducteur (6) du ralentisseur (R) est un indudeur à pôles (5) entourés chacun d'un enroulement inducteur (6) et saillant vers l'extérieur sur la face externe de la couronne rotorique (4) du ralentisseur (R).

## Patentansprüche

1. Baueinheit, die einerseits aus einer elektromagnetischen Bremse zur Verlangsamung der Drehung einer um ihre Achse angetriebenen Antriebswelle (1) eines Fahrzeugs und andererseits aus den Mitteln für die Stromversorgung (G) der besagten Bremse besteht, wobei diese Baueinheit einen mit der Antriebswelle (1) koaxialen Stator (3) und einen Rotor (2) umfaßt, der drehfest mit der Antriebswelle (1) verbunden ist, so daß er eine zylindrische Außenfläche in unmittelbarer Nähe einer zylindrischen Innenfläche des Stators (3) unter Einfügung eines Luftspalts (E) mit geringer Dicke aufweist, wobei der Rotor (2) einen Induktor mit wenigstens einer Elektromagnetwicklung (6) umfaßt, der unter der Einwirkung eines durch die besagten Stromversorgungsmittel (G) gelieferten Erregerstroms ein Magnetfeld in einem ringförmigen ferromagnetischen Teil (7) des Stators (3) erzeugen kann, das den Anker der Bremse (R) bildet, und wobei die besagten Stromversorgungsmittel (G) einen Wechselstromgenerator umfassen, dessen als Rotor-Anker bezeichneter Anker mit mehrphasiger Spule (11) zum Rotor (2) gehört und an die besagten Wicklungen (6) über einen Gleichrichter (18) angeschlossen ist, der ebenfalls zum Rotor (2) gehört, und dessen als Stator-Induktor bezeichneter Induktor zum Stator (3) gehört und mit einem geringen Spiel (e) den Rotor-Anker (11) dieses Wechselstromgenerators umgibt, wobei die beiden Rotorkränze, die durch die Elektromagnetwicklung (6) der Bremse (R) bzw. durch den Anker des Wechselstromgenerators (G) gebildet werden, auf der Außenfläche einer gleichen Innenhülse (13) axial nebeneinander angeordnet sind, **dadurch gekennzeichnet, daß** die besagte Baueinheit außerdem erste Schaltmittel (Kr1, Kr2, Kr3), die dazu bestimmt sind, die Bremse (R) elektrisch an den Wechselstromgenerator (G) anzuschließen, und zweite Schaltmittel (Ks1, Ks2, Ks3) umfaßt, die dazu bestimmt sind, den Wechselstromgenerator (G) elektrisch an das Bordnetz des Fahrzeugs anzuschließen, wobei die besagten ersten und zweiten Schaltmittel geeignet sind, um zusammen in zwei entsprechenden ersten Positionen, bei denen der Wechselstromgenerator als Synchron-Stromversorgungsquelle der Bremse über seinen Rotor-Anker arbeitet, oder in zwei entsprechenden zweiten Positionen angesteuert zu werden, bei denen der Wechselstromgenerator als Asynchron-Stromversorgungsquelle des Bordnetzes des Fahrzeugs über seinen Stator-Induktor arbeitet.

2. Baueinheit nach Anspruch 1, **dadurch gekennzeichnet, daß** der Stator-Induktor des Wechselstromgenerators mit einer Mehrphasenspule (12) ausgeführt ist.

3. Baueinheit nach Anspruch 1 oder Anspruch 2, **dadurch gekennzeichnet, daß** die ersten (Kr1, Kr2, Kr3) und zweiten (Ks1, Ks2, Ks3) Schaltmittel geeignet sind, um zusammen in zwei dritten entsprechenden Positionen angesteuert zu werden, bei denen der Wechselstromgenerator als Asynchronmotor arbeitet.

4. Baueinheit nach Anspruch 3, **dadurch gekennzeichnet, daß** der Wechselstromgenerator dazu bestimmt ist, den Motor des Fahrzeugs anzutreiben.

5. Baueinheit nach einem der Ansprüche 1 bis 4, **dadurch gekennzeichnet, daß** :
- die ersten Schaltmittel eine Mehrzahl von Schaltern (Kr1, Kr2, Kr3) umfassen, deren Anzahl gleich der Anzahl der Phasen des Rotor-Ankers des Wechselstromgenerators ist, wobei der erste (Kr1) von ihnen zwischen dem Ausgang des Gleichrichters (18) und dem Rotor-Induktor (6) der Bremse (R) geschaltet ist, während die anderen Schalter (Kr2, Kr3) ihrerseits die Phasen des Rotor-Ankers (11) des Wechselstromgenerators (G) verbinden, und daß
- die zweiten Schaltmittel eine Mehrzahl von Schaltern (Ks1, Ks2, Ks3) umfassen, deren Anzahl gleich der Anzahl der Phasen des Stator-Induktors des Wechselstromgenerators ist, wobei jeder dieser Schalter einen Kondensator mit dem Stator-Induktor (12) des Wechselstromgenerators (G) verbindet.

6. Baueinheit nach einem der Ansprüche 1 bis 5, **dadurch gekennzeichnet, daß** die Betriebsarten des Wechselstromgenerators abwechselnd mittels einer elektronischen Steuereinheit (20) ausgewählt werden, die mit dem Wechselstromgenerator (G) verbunden ist.

7. Baueinheit nach einem der Ansprüche 1 bis 6, **dadurch gekennzeichnet, daß** der Induktor (6) der Bremse (R) ein Induktor mit Polen. (5) ist, die jeweils von einer Erregerwicklung (6) umgeben sind und auf der Außenfläche des Rotorkranzes (4) der Bremse (R) nach außen vorstehen.

## Claims

1. An assembly which comprises, firstly, an electromagnetic retarder adapted to slow down the rotation of a vehicle engine shaft (1) which is driven about its axis (X), and secondly, electrical power supply means (G) for the said retarder, the said assembly comprising a stator (3) coaxial with the engine shaft (1), and a rotor (2) which is rotatable with the engine shaft (1), being such that it has an external cylindrical face close to an internal cylindrical face of the stator (3) with an air gap (E) of small width being interposed, the rotor (2) comprising an inductor with at least one electromagnet winding (6) which is adapted to produce, under the effect of an electrical excitation current supplied by the said electrical power supply means (G), a magnetic field in an annular ferromagnetic member (7) of the stator (3) which constitutes the armature of the retarder (R), and the said electrical power supply means (G) comprising an alternator, the armature of which, having a polyphase winding (11) and being a rotor type armature, is part of the rotor (2) and is connected to the said windings (6) through a rectifier (18) which is also part of the rotor (2), the inductor of the alternator, which is a stator type inductor and is part of the stator (3) surrounding the rotor type armature (11) of the said alternator with a small clearance (e) ; the two rotor crowns, which consist of the electromagnet winding (6) of the retarder (R) and the armature of the alternator (G) respectively, being axially juxtaposed on the external face of a common internal sleeve (13), **characterised in that** the said assembly further comprises first switching means (Kr1, Kr2, Kr3) adapted to couple the retarder (R) electrically to the alternator (G), together with second switching means (Ks1, Ks2, Ks3) adapted to couple the alternator (G) electrically to the on-board wiring network of the vehicle, the said first and second switching means being adapted to be controlled together in two corresponding first positions, for which the alternator works as a synchronous electrical power supply source for the retarder through its rotor type armature, or in two corresponding second positions, for which the alternator works as an asynchronous electrical power supply source for the on-board network of the vehicle through its stator type inductor.

2. An assembly according to Claim 1, **characterised in that** the stator type inductor of the alternator has a polyphase winding (12).

3. An assembly according to Claim 1 or Claim 2, **characterised in that** the first switching means (Kr1, Kr2, Kr3) and the second switching means (Ks1, Ks2, Ks3) are adapted so that they can, in addition, be controlled together in two corresponding third positions for which the alternator works as a synchronous motor.

4. An assembly according to Claim 3, **characterised in that** the said alternator is adapted to drive the engine of the vehicle.

5. An assembly according to any one of Claims 1 to 4,
**characterised in that**:
- the first switching means comprise a plurality of interrupters (Kr1, Kr2, Kr3), the number of which is equal to the number of phases of the rotor type armature of the alternator, the first said alternator (Kr1) being connected between the output of the rectifier (18) and the rotor type inductor (6) of the retarder (R), while the other interrupters (Kr2, Kr3) connect together the phases of the rotor type armature (11) of the alternator (G), and **in that**:
- the second switching means comprise a plurality of interrupters (Ks1, Ks2, Ks3), the number of which is equal to the number of phases in the stator type inductor of the alternator, with each of the said interrupters connecting a capacitor to the stator type inductor (12) of the alternator (G).

6. An assembly according to any one of Claims 1 to 5, **characterised in that** the working modes of the alternator are selected alternately by means of an electronic control unit (20) which is connected to the alternator (G).

7. An assembly according to any one of Claims 1 to 6, **characterised in that** the inductor (6) of the retarder (R) is an inductor with poles (5) each of which is surrounded by an inductor winding (6) and projects outwards on the external face of the rotor type crown wheel (4) of the retarder (R).
